# FASCICULE DE BREVET EUROPEEN

(11) **EP 0 640 569 B1**
(45) Date de publication et mention de la délivrance du brevet: **26.01.2000**
(21) Numéro de dépôt: 94401913.2
(22) Date de dépôt: 30.08.1994
(51) Int. Cl.: C03B 23/027, C03B 23/025, C03B 23/03

(54) **Procédé et dispositif pour le bombage de feuilles de verre**
Verfahren und Vorrichtung zum Biegen von Glasscheiben
Method and apparatus for bending glass-sheets

(30) Priorité: 31.08.1993 FR 9310396
(43) Date de publication de la demande: 01.03.1995
(73) Titulaire: SAINT-GOBAIN VITRAGE, 92400 Courbevoie (FR)
(72) Inventeur: Didelot, Claude, F-60150 Thourotte (FR)
(74) Mandataire: Muller, René

(56) Documents cités:
- EP-A- 0 338 216
- EP-A- 0 351 739
- EP-A- 0 414 232
- EP-A- 0 445 672
- AU-B- 4 102 189
- GB-A- 869 518
- GB-A- 887 770

## Description

L'invention concerne le bombage de feuilles de verre et en particulier le bombage sur une forme ou configuration évidée désignée communément par cadre ou squelette de bombage.

Le bombage des feuilles de verre sur squelette est une technique communément employée pour bomber les feuilles de verre et en particulier pour bomber simultanément les deux feuilles de verre destinées à former un vitrage feuilleté bombé tel un pare-brise de véhicule automobile. Une telle technique de bombage sur cadre autorise la réalisation de vitrage présentant des courbures complexes et plus particulièrement une double courbure. Dans cette technique, les deux feuilles de verre posées l'une sur l'autre avec interposition d'un agent de séparation adéquat sont supportées le long de leurs parties d'extrémités marginales d'une façon sensiblement horizontale par un cadre ayant le profil désiré, c'est-à-dire le profil correspondant à celui définitif des deux feuilles de verre bombées. Ainsi supportées, les deux feuilles de verre passent dans un four de bombage, généralement un four tunnel ayant des zones de chauffage à des températures différentes.

La première de ces zones est généralement une zone de préchauffage dans laquelle les feuilles de verre sont chauffées jusqu'à une température du verre sensiblement proche du point de ramollissement. La zone suivante est la zone de bombage où les feuilles de verre portées à une température d'environ 600°C vont se cintrer progressivement par gravité pour épouser finalement en périphérie la forme du cadre et atteindre les courbures désirées . Les feuilles de verre sont ensuite refroidies pour être, à la sortie du four tunnel, retirées du cadre de formage.

Ce procédé de bombage sur squelette donne entière satisfaction surtout lorsque les courbures ne sont pas très accentuées et/ou lorsque le bombage est essentiellement cylindrique. Lorsque les courbures sont plus accentuées, en particulier au voisinage de la périphérie des vitrages, il peut se produire ce que l'on appelle un contre-bombage aux coins des feuilles de verre, généralement à deux de ces coins, ou même aux quatre coins selon la géométrie du vitrage, c'est-à-dire ses courbures définitives et aussi sa forme initiale de découpe. Le contre-bombage correspond à une inversion non désirée dans ce cas de la courbure.

Les feuilles de verre bombées obtenues ne répondent plus alors aux conditions imposées au vitrage pour pouvoir être montées dans une baie de carrosserie.

Pour remédier au contre-bombage, il a été proposé dans la demande de brevet EP-A-448 447, un procédé de bombage par gravité comprenant au moins deux étapes.

La première étape consiste à bomber par gravité les feuilles de verre selon une première forme correspondant à une ébauche de la forme définitive. Durant cette première étape, les feuilles de verre sont supportées par une première ligne périphérique procurée par le cadre de bombage.

La seconde étape consiste à bomber par gravité les feuilles de verres selon la forme définitive en étant supportées par une seconde ligne périphérique, issue du même cadre. Pour cela, le cadre est constitué sur au moins une partie de sa périphérie d'une structure doublée.

Ce procédé de bombage est tout à fait satisfaisant pour le bombage de deux feuilles de verre destinées à la réalisation d'un vitrage tel qu'un pare-brise de véhicule automobile actuel. Il comporte cependant une limite liée à l'angle d'"accostage" c'est-à-dire l'angle formé par un vecteur tangent à l'extrémité latérale de la partie la plus large du vitrage avec le plan horizontal, lorsque le vitrage bombé est placé dans une position horizontale.

Le procédé de bombage décrit précédemment permet de réaliser des vitrages présentant des angles d'accostage d'une valeur maximale d'environ 45 degrés, pour de faibles rayons de courbure.

Or la demande actuelle notamment en ce qui concerne les pare-brises de véhicule automobile s'orientent vers des angles d'accostage supérieurs à 50 degrés et pouvant atteindre 80 degrés.

Pour remédier au contre-bombage, dans le cas du bombage d'une seule feuille de verre, destinée à être trempée thermiquement et qui à cette fin est fortement chauffée, il a déjà été proposé notamment dans le brevet US-3 511 628 de maintenir les bords de ladite feuille pendant l'opération de bombage. Avec un tel procédé, il paraît possible de bomber une feuille de verre présentant des angles d'accostage supérieurs à 50 degrés. Cependant, ce procédé n'est pas satisfaisant en particulier dans le cas du bombage de plusieurs feuilles de verre simultanément.

Il a également été proposé dans le brevet EP-B-0 250 311 l'utilisation d'une force additionnelle à la force de gravité s'appliquant sur la face supérieure de la feuille de verre du dessus aux emplacements sujets à un contre-bombage. Un tel procédé semble également pouvoir faciliter la réalisation d'angles d'accostage supérieurs à 50 degrés. Cependant, ce procédé n'est pas satisfaisant pour toutes les formes de vitrages, sujettes à un contre-bombage non désiré au cours de leur passage dans les fours de bombage par gravité.

Le document EP-A-0 414 232 décrit un procédé de bombage de deux feuilles de verre simultanément combinant des forces de gravité et de pressage selon lequel la feuille extérieure est ramollie plus rapidement dans une atmosphère chaude.

Le document EP-A-0 445 672 décrit encore un procédé de bombage d'une feuille de verre déposée sur un cadre comportant des parties pivotantes, le bombage s'effectuant sous l'effet de la gravité et de forces de pressage.

L'invention a pour but le bombage d'une ou plusieurs feuilles de verre simultanément sur un cadre ou squelette permettant d'éviter le contre-bombage sur une zone trop importante du vitrage et qui permet en outre d'obtenir des vitrages qui présentent des angles d'accostage importants, plus particulièrement supérieurs à 50 degrés, avec de faibles rayons de courbure, on entend des rayons de courbure inférieurs à 200 millimètres et souvent inférieurs à 150 millimètres.

Ce but est atteint selon l'invention par un procédé de bombage sur cadre, d'au moins une feuille de verre, au cours duquel la ou les feuilles de verre empilées, disposées sur un cadre de bombage en position horizontale, sont élevées à la température de déformation et sont bombées en au moins deux étapes, la première consistant en l'action de la gravité sur la ou les feuilles de verre en supportant la ou les feuilles de verre suivant une première ligne périphérique, et conduisant à une ébauche de la forme définitive, et la dernière étape conduisant à la forme définitive de la ou des feuilles de verre en supportant la ou les feuilles de verre suivant une seconde ligne périphérique de courbure différente qui se substitue à la première, cette forme définitive étant atteinte au cours de la dernière étape, par la combinaison d'actions simultanées ou non de la gravité et d'au moins une force mécanique additionnelle.

Dans une première variante selon l'invention la force mécanique additionnelle est une force de pressage exercée par au moins une pièce de forme.

Le procédé ainsi défini permet d'obtenir des vitrages bombés ne présentant de contre-bombage que dans des zones limitées à 20 millimètres du bord du vitrage et possédant des angles d'accostage supérieurs à 50 degrés, pour des rayons de courbure inférieurs à 150 millimètres dans les zones d'accostage. Cependant, les actions de pressage exercées sur le verre à sa température de déformation peuvent selon la pièce de forme utilisée laisser des marques. Celles-ci peuvent être le cas échéant masquées par la suite, notamment par un émail, lorsqu'elles sont suffisamment proches des bords du vitrage.

Dans une seconde variante avantageuse selon l'invention, la force mécanique additionnelle est une force de résistance exercée par au moins une pièce de forme sur laquelle on vient appliquer la ou les feuilles de verre.

Selon cette seconde variante le verre est soumis à une sorte d'étirage ou d'enroulement autour de la pièce de forme et celle-ci ne laisse ainsi quasiment aucune trace ou marque sur la surface de la feuille de verre qui vient en contact avec elle.

Selon un mode préféré de l'invention, au cours de la première étape on réalise essentiellement au moins une ébauche de la courbure transversale. Les étapes suivantes du bombage consiste alors à terminer la courbure transversale et à réaliser la courbure longitudinale.

Il est également possible dans la première étape de bomber essentiellement selon la courbure transversale et selon la courbure longitudinale localisée pour cette dernière à la partie médiane de la ou des feuilles de verre. On réalise alors dans la dernière étape essentiellement le bombage complémentaire longitudinal, localisé sur les parties périphériques de la ou des feuilles de verre.

Sous une forme de mise en oeuvre du procédé qui utilise deux lignes périphériques, ces deux lignes périphériques sont entièrement distinctes l'une de l'autre. La substitution d'une ligne par l'autre s'opère soit par une élévation du niveau de la deuxième ligne par rapport au niveau de la première, soit par un abaissement du niveau de cette première ligne, soit par une combinaison d'une élévation du niveau d'une partie de la deuxième ligne et un abaissement du niveau d'une partie de la première ligne.

Sous une autre forme de mise en oeuvre du procédé qui utilise deux lignes périphériques, la seconde ligne périphérique est distincte par parties seulement de la première ligne. La distinction porte de préférence sur les parties latérales des deux lignes.

Les lignes périphériques selon l'invention sont généralement des lignes continues en particulier pour la ligne définissant la forme bombée définitive de la ou des feuilles de verre, bien qu'une ligne formée de plusieurs points ou sections disposés en des emplacements adéquats puisse également convenir, en particulier pour la ligne définissant l'ébauche.

Sous un des aspects de l'invention et en particulier pour éviter un contrebombage, la première ligne périphérique destinée à la réalisation de la première étape de bombage est telle que l'angle formé par tout vecteur tangent à ladite ligne avec le plan horizontal est inférieur à 20 degrés et de préférence inférieure à 15 degrés.

L'invention propose également un dispositif pour la mise en oeuvre du procédé tel que décrit précédemment.

Ce dispositif pour le bombage sur cadre d'au moins une feuille de verre comprend d'une part un cadre dont au moins une partie est doublée de façon à permettre deux positions, la première conduisant à une ébauche de forme et la seconde à la forme définitive, et d'autre part, au moins une pièce de forme intervenant en combinaison avec la deuxième positions pour la formation de la forme définitive, et des moyens permettant un rapprochement relatif de la pièce de forme et du cadre pour l'application de la pièce de forme sur le vitrage ou réciproquement.

De préférence, lors de la formation de la forme définitive, au moins une partie du cadre est mobile en direction d'au moins une pièce de forme immobile.

Selon un premier mode de réalisation, au moins les parties latérales extrêmes du cadre sont doublées.

Selon un second mode de réalisation la partie doublée du cadre s'étend sur la quasi-totalité de la périphérie du cadre.

Selon un mode avantageux de l'invention, les parties doublées du cadre sont réalisées par des éléments pivotants du cadre.

Sous un des aspects de l'invention, le cadre ébauche est tel que l'angle formé par tout vecteur tangent à ce cadre, avec le plan horizontal est inférieur à 20 degrés et de préférence inférieur à 15 degrés.

Le cadre présente avantageusement dans sa position définitive un angle, formé par un vecteur tangent à l'extrémité latérale de la partie la plus large du cadre et le plan horizontal, supérieur à 50 degrés et pouvant atteindre 80 degrés.

Les pièces de forme sont de préférence des éléments surfaciques, c'est-à-dire qui sont destinés à avoir un contact surfacique. Le dispositif de bombage selon l'invention comprend généralement deux pièces de forme disposées symétriquement par rapport à l'axe du cadre. La pièce de forme peut être dans une réalisation extrême un élément unique recouvrant tout le vitrage.

Dans une variante, le contact avec la feuille de verre peut être linéaire selon une ou plusieurs lignes consécutives disposées aux emplacements désirés.

Dans une autre variante, le contact peut être ponctuel selon un ou plusieurs points disposés aux emplacements désirés.

Selon ces deux variantes, les pièces de forme sont avantageusement multiples de façon à constituer des surfaces discontinues.

D'autres détails et caractéristiques avantageuses ressortent ci-après de la description d'exemples de dispositif selon l'invention en référence aux figures 1, 2, 3, qui représentent :
- figure 1 : une vue en perspective d'un schéma d'un dispositif selon l'invention,
- figure 2 : une représentation schématique en six étapes du procédé selon l'invention,
- figure 3 : une représentation schématique d'un autre exemple de réalisation d'un dispositif selon l'invention.

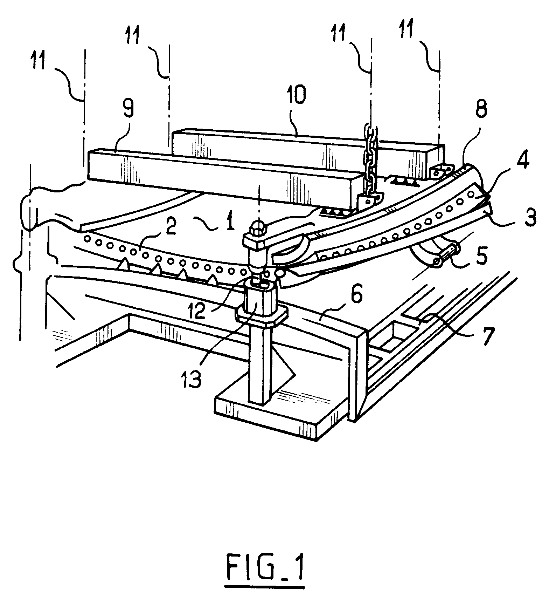

La figure 1 représente un schéma d'un dispositif selon l'invention. Un cadre 1 comporte deux parties longitudinales ou longerons 2 dont une seule est visible sur la figure et deux parties transversales ou traverses d'extrémités 3. Une seule de ces traverses 3 est également visible sur la figure. Ces différents éléments sont reliés par des axes, non représentés, qui assurent la rigidité du système, et forment ainsi un cadre fixe qui représente le profil de l'ébauche souhaitée.

Autour des parties transversales fixes 3 sont montées intérieurement des traverses pivotantes 4 qui présentent des courbures différentes de celles des traverses fixes 3.

Ces traverses pivotantes 4 peuvent adopter deux positions différentes. La première est représentée sur la figure 1. Dans ce cas, une feuille de verre qui est déposée vient en contact avec l'ensemble du cadre fixe et épouse sa forme lorsqu'il est amené à sa température de ramollissement.

Il sera revenu par la suite sur la seconde position des traverses pivotantes 4. Le passage de l'une à l'autre de ces positions peut se faire dans le cas de la figure 1 par une action sur la poignée 5, qui entraîne le pivotement de la traverse 4. La poignée 5 envisagée pour modifier la position des traverses pivotantes 4, n'est qu'un exemple de réalisation. Il pourrait également s'agir par exemple de poids, qui fixés à des tiges solidaires des traverses pivotantes 4, jouent un rôle de pendule et entraîne la rotation de ces parties mobiles 4.

Le cadre 1 est supporté par un squelette 6 prévu pour être déplacé suivant des rails 7. De cette façon, il est possible de véhiculer le cadre sur lequel sont disposées des feuilles de verre au sein d'un four tunnel ayant des zones de chauffage à des températures différentes.

Au-dessus du cadre, est représentée une pièce de forme 8 qui intervient lors du bombage des feuilles de verre. Il sera revenu par la suite sur cette pièce de forme 8. Elle est reliée à une autre pièce de forme, non représentée, placée symétriquement à l'autre extrémité du cadre 1, par l'intermédiaire de deux poutres 9, 10. Ces poutre 9, 10 sont elles-mêmes maintenues par des dispositifs 11, symbolisés par une chaîne, qui permettent de varier la hauteur de la position des pièces de forme 8. Sont également associés à ces poutres 9, 10 des éléments 12 ou "doigts" qui permettent en venant se positionner dans des "éléments femelles" 13, de centrer les pièces de forme 8 par rapport au cadre 1. Ces éléments 12 permettent également de maintenir un espace défini entre les pièces de forme 8 et le cadre 1. Ces éléments 12 sont avantageusement placés aux quatre coins du cadre 1.

La pièce de forme 8 est représentée sur cette figure 1 comme un élément présentant une courbure selon un faible rayon de courbure, inférieur à 200 mm, et s'étendant sur toute la largeur du cadre. Et cette pièce de forme 8 est associée à une autre pièce identique placée symétriquement à l'autre extrémité du cadre. Cependant, cette représentation n'est pas limitative. Elles peuvent par exemple chacune être remplacée par plusieurs éléments placés les uns à côté des autres de façon à former une surface discontinue. Il est également possible de disposer une pièce de forme unique qui recouvre tout le cadre 1.

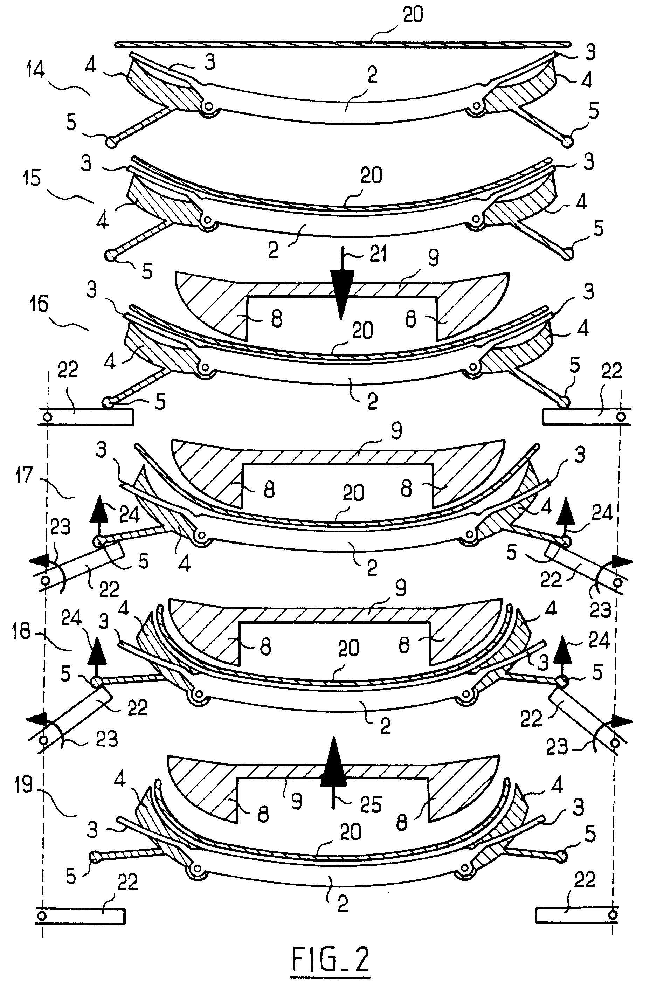

La figure 2 schématise le procédé selon l'invention en six étapes chronologiques 14, 15, 16, 17, 18, 19. Afin de faciliter les explications, on parlera de première position ou position d'ébauche et de deuxième position ou position définitive, le passage de l'une à l'autre se faisant par rotation des parties pivotantes 4.

Le schéma 14 représente le cadre 1 dans sa première position. Deux feuilles de verre 20, symbolisées par un trait épais, sont placés sur le cadre en étant centrées par exemple grâce à des molettes, non représentées, disposées sur le pourtour du cadre. La feuille de verre inférieure porte en différents points ou sections sur le cadre, à environ 5 mm de son bord. L'angle formé par un vecteur tangent à l'extrémité latérale la plus large du cadre et les feuilles de verre, qui forment alors un plan horizontal, est d'environ 15 degrés. Les figures ne sont que des schémas qui ne font pas ressortir cette valeur avec exactitude.

Cette valeur permet d'éviter un contre-bombage lorsque les feuilles de verre vont venir épouser la forme du cadre.

Le cadre 1 est alors amené dans le four de bombage par déplacement le long des rails 7. Dans une première phase, l'ensemble subit un préchauffage. Puis dans une deuxième phase, qui porte et maintient le verre à une température proche de sa température de ramollissement, les feuilles de verre s'affaissent par gravité. Le résultat est représenté sur le schéma 15. Les feuilles de verre prennent appui sur le pourtour du cadre fixe et principalement sur les parties centrales des longerons 2, en prenant ainsi la forme d'une ébauche des courbures définitives à obtenir. Cette forme ébauche présente notamment une courbure transversale proche ou supérieure à la courbure transversale définitive.

La forme ébauche étant obtenue, le cadre peut de nouveau être déplacé le long des rails 7 et est positionné sous les pièces de forme 8. Les pièces de forme 8 sont alors en position haute de façon à prévenir tous risques de frottement des feuilles de verre lors du déplacement. Les pièces de forme sont ensuite amenées en position basse à l'aide des dispositifs 11. Ce mouvement est symbolisé par la flèche 21 sur le schéma 16. Les pièces de forme 8 sont alors en contact avec les feuilles de verre mais n'exercent aucune force sur elles. Ceci est possible grâce aux éléments 11 qui permettent un réglage fin de la position de ces pièces de forme.

Les schémas 17, 18 représentent la modification du cadre 1. Le schéma 17 représente le cadre en cours de modification et le schéma 18 le représente dans sa position définitive.

Des éléments 22 animés par exemple d'un mouvement de rotation symbolisé par les flèches 23 entraînent le mouvement des poignées 5, symbolisé par les flèches 24 et donc la rotation des traverses pivotantes 4. Ces traverses mobiles 4 pivotent à l'intérieur des traverses 3 et se positionnent finalement au-dessus des traverses 3 pour former ainsi la position définitive du cadre. Les courbures définitives sont ainsi obtenues.

Dans la position définitive représentée sur le schéma 18, un vecteur tangent à l'extrémité latérale de la partie la plus large du cadre forme un angle avec le plan horizontal supérieur à 50 degrés et pouvant atteindre 80 degrés ou plus, selon la courbure donnée aux traverses pivotantes 4.

Les forces exercées sur les parties mobiles 4 doivent être suffisantes pour entraîner leur rotation et les feuilles de verre qui reposent sur ces traverses 4.

Les pièces de forme 8 exercent alors des forces de résistance sur toute la surface des feuilles de verre en contact avec elles. La rotation des parties transversales pivotantes 4 entraîne le conformage par enroulement des feuilles de verre autour de ces pièces de forme 8. Il est ainsi possible d'obtenir des angles d'accostage supérieurs à 50 degrés sans apparition de contre-bombage dans les coins des feuilles de verre.

Lorsque la forme définitive est obtenue, les pièces de forme 8 sont relevées. Cette étape est symbolisée par la flèche 25 sur le schéma 19.

Le cadre 1 peut de nouveau être déplacé le long des rails 7 vers une zone de refroidissement.

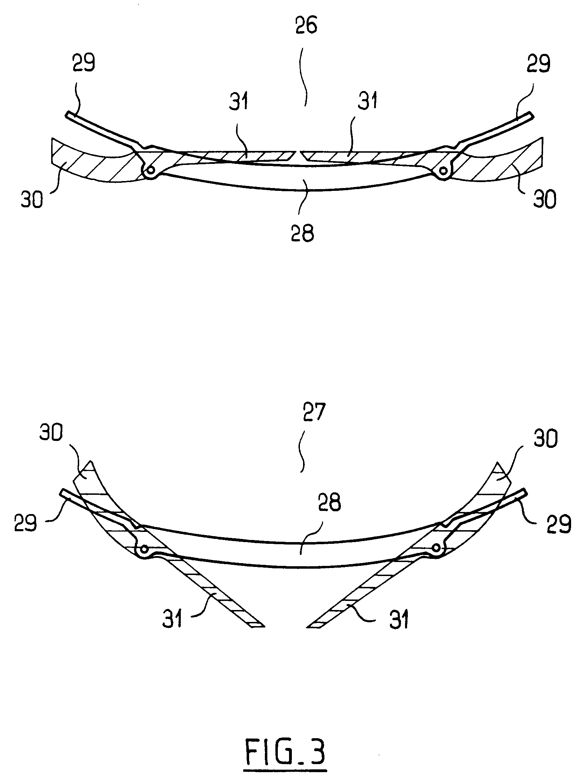

La figure 3 représente un autre exemple de réalisation d'un cadre selon l'invention. Ce cadre est également constitué d'une partie fixe formée de deux longerons 28 et de deux traverses 29. Par contre, les parties pivotantes doublent le cadre sur la quasi-totalité de sa périphérie. Chaque partie pivotante est composée d'une traverse 30 et de deux demi-longerons 31. Selon cette variante de réalisation, le cadre conduisant à une forme ébauche, représenté sur le schéma 26, se compose des traverses fixes 29 et des demi-longerons 31.

Dans la seconde position représentée sur le schéma 27, le cadre correspondant à la forme définitive est formé par les traverses 30 pivotantes et les longerons fixes 28.

Dans le cas représenté sur la figure 3, la courbure longitudinale étant peu prononcée dans la première position (schéma 26), on obtient essentiellement la courbure transversale sur la position d'ébauche du cadre.

Les feuilles de verre bombées obtenues selon l'invention peuvent être utilisées pour la fabrication d'un vitrage feuilleté par interposition entre-elles d'au moins une feuille intercalaire en polyvinylbutyral par exemple.

Selon l'invention, il apparaît que le dispositif laisse très peu de traces ou marques sur les feuilles de verre. En effet, les traces laissées par le cadre sur la feuille inférieure sont en périphérie et très proches du bord et peuvent ainsi être dans la zone couverte par le joint utilisé pour le montage du vitrage dans la baie de carrosserie et sont donc invisibles sur le vitrage monté.

D'autre part, il apparaît au moins partiellement une double marque puisque le cadre est au moins partiellement doublé. Mais les parties doublées sont réalisées de telle façon que la partie pivotante laisse une marque la plus proche possible de celle laissée par la partie fixe. Ces deux marques sont donc masquées en même temps par le joint de montage.

Ces deux marques, caractéristiques d'un vitrage feuilleté obtenu selon ce procédé peuvent par exemple être observées par réflexion en forte incidence sous un projecteur.

En ce qui concerne les contacts entre les pièces de formes 9, 10 et la feuille de verre supérieure, il apparaît que ceux-ci ne laissent quasiment aucune marque. De plus, il est possible d'utiliser des intercalaires du type filets à maille métallique qui enveloppent les pièces de forme et qui protègent plus efficacement encore les feuilles de verre.

## Revendications

1. Procédé de bombage sur cadre (1) d'au moins une feuille de verre (20), au cours duquel la ou les feuilles de verre empilées, disposées sur un cadre de bombage en position horizontale sont élevées à la température de déformation et sont bombées en au moins deux étapes, la première consistant en l'action de la gravité sur la ou les feuilles de verre en supportant la ou les feuilles de verre suivant une première ligne périphérique et conduisant à une ébauche de la forme définitive, et la dernière étape conduisant à la forme définitive de la ou des feuilles de verre en supportant la ou les feuilles de verre suivant une seconde ligne périphérique de courbure différente qui se substitue à la première, ***caractérisé en ce que*** la forme définitive est atteinte au cours de la dernière étape par la combinaison d'actions, simultanées ou non, de la gravité et d'au moins une force mécanique additionnelle.

2. Procédé selon la revendication 1, ***caractérisé en ce que*** la force mécanique additionnelle est une force de pression.

3. Procédé selon la revendication 1, ***caractérisé en ce que*** la force mécanique additionnelle est une force de résistance permettant un conformage de la feuille de verre (20).

4. Procédé selon l'une des revendications 1 à 3, ***caractérisé en ce que*** la première étape de bombage consiste à réaliser au moins une ébauche de la courbure transversale.

5. Procédé selon l'une des revendications 1 à 4*, **caractérisé en ce que*** dans la première étape de bombage on bombe essentiellement selon la courbure transversale et selon la courbure longitudinale localisée pour cette dernière à la partie médiane de la ou des feuilles de verre (20) ***et en ce que*** dans la dernière étape on réalise le bombage complémentaire essentiellement longitudinal et localisé sur les parties périphériques de la ou des feuilles de verre.

6. Procédé selon la revendication 1 à 5, ***caractérisé en ce que*** les lignes périphériques sont au moins en partie distinctes l'une de l'autre.

7. Procédé selon la revendication 6, ***caractérisé en ce que*** la substitution porte sur les parties latérales de la première ligne.

8. Procédé selon la revendication 6 ou 7, ***caractérisé en ce que*** la substitution consiste à élever le niveau d'au moins une partie de la deuxième ligne.

9. Procédé selon l'une des revendications 5 à 8, ***caractérisé en ce que*** la première ligne périphérique est telle que l'angle formé par tout vecteur tangent à ladite ligne avec le plan horizontal est inférieur à 20 degrés et de préférence inférieur à 15 degrés.

10. Dispositif pour le bombage sur cadre d'au moins une feuille de verre (20) comprenant un cadre (1) dont au moins une partie est doublée de façon à permettre deux positions, la première conduisant à une ébauche de forme et la seconde à la forme définitive, ***caractérisé en ce qu'il*** comprend au moins une pièce de forme (8) intervenant pour la formation de la forme définitive, et des moyens (5, 22, 23) permettant un rapprochement relatif de la pièce de forme et du cadre.

11. Dispositif selon la revendication 10, ***caractérisé en ce que*** lors de la formation de la forme définitive, au moins une partie du cadre (1) est mobile en direction d'au moins une pièce de forme (8) immobile.

12. Dispositif selon l'une des revendications 10 ou 11, ***caractérisé en ce qu'au*** moins les parties latérales extrêmes du cadre (1) sont doublées.

13. Dispositif selon l'une des revendications 10 à 12, ***caractérisé en ce que*** la partie doublée du cadre (1) s'étend sur la quasi-totalité de la périphérie du cadre.

14. Dispositif selon l'une des revendications 10 à 13, ***caractérisé en ce que*** les parties doublées du cadre (1) sont réalisées par des éléments pivotants (4, 30) fixés sur un cadre ébauche et pouvant se substituer à des parties de ce cadre ébauche pour la formation de la forme définitive.

15. Dispositif selon l'une des revendications 10 à 14, ***caractérisé en ce que*** la première position du cadre (1) est telle que l'angle formé par tout vecteur tangent à ce cadre avec le plan horizontal est inférieur à 20 degrés et de préférence inférieur à 15 degrés.

16. Dispositif selon l'une des revendications 10 à 15, ***caractérisé en ce que*** la seconde position du cadre (1) est telle que l'angle formé par un vecteur tangent à l'extrémité latérale de la partie la plus large du cadre, et le plan horizontal est supérieur à 50 degrés.

17. Dispositif selon l'une des revendications 10 à 16, ***caractérisé en ce qu'au*** moins une pièce de forme (8) est telle qu'un contact au moins ponctuel est réalisé avec le vitrage (20).

18. Dispositif selon la revendication 17, ***caractérisé en ce que*** le contact entre la pièce de forme (8) et le vitrage (20) est au moins linéaire.

19. Dispositif selon la revendication 18, ***caractérisé en ce que*** le contact entre la pièce de forme (8) et le vitrage (20) est surfacique.

20. Dispositif selon l'une des revendications 10 à 19, ***caractérisé en ce que*** la ou les pièces de forme (8) sont recouvertes d'un filet à mailles métalliques de sorte que celui-ci soit en contact avec une feuille de verre (20).

21. Application du procédé selon une des revendications 1 à 9, pour le bombage des feuilles de verre (20) sujettes à un contre-bombage.

22. Application du procédé selon une des revendications 1 à 9, pour le bombage simultané d'au moins deux feuilles de verre (20) superposées.

## Claims

1. Process for bending on a frame (1) of at least one glass sheet (20), during which the stacked glass sheet or sheets, placed on a bending frame in a horizontal position, are raised to the deformation temperature and are bent in at least two stages, the first consisting of the action of gravity on the glass sheet or sheets, which are supported along a first peripheral line and leading to a blank of the final shape, and the final stage leading to the final shape of the glass sheet or sheets, which are supported along a second peripheral line having a different curvature and which is substituted for the first, characterized in that the final shape is reached during the final stage by the simultaneous or non-simultaneous combination of the actions of gravity and at least one additional mechanical force.

2. Process according to claim 1, characterized in that the additional mechanical force is a pressure force.

3. Process according to claim 1, characterized in that the additional mechanical force is a resistance force permitting a shaping of the glass sheet (20).

4. Process according to one of the claims 1 to 3, characterized in that the first bending stage consists of producing at least one blank of the transverse curvature.

5. Process according to one of the claims 1 to 4, characterized in that in the first bending stage bending essentially takes place according to the transverse curvature and according to the longitudinal curvature located for the latter in the median portion of the glass sheet or sheets (20) and in that in the final stage the complimentary, essentially longitudinal bending takes place, which is located on the peripheral portion of the glass sheet or sheets.

6. Process according to claim 1 to 5, characterized in that the peripheral lines are at least partly distinct from one another.

7. Process according to claim 6, characterized in that the substitution relates to the lateral portions of the first line.

8. Process according to claim 6 or 7, characterized in that the substitution consists of raising the level of at least one portion of the second line.

9. Process according to one of the claims 5 to 8, characterized in that the first peripheral line is such that the angle formed by any vector tangential to said line with the horizontal plane is below 20° and preferably below 15°.

10. Device for bending on a frame of at least one glass sheet (20) comprising a frame (1), whereof at least one portion is duplicated so as to permit two positions, the first leading to a shape blank and the second to the final shape, characterized in that it comprises at least one shaping part (8) used for the formation of the final shape, and means (5, 22, 23) permitting a relative approach of the shaping part and the frame.

11. Device according to claim 10, characterized in that during the formation of the final shape, at least one portion of the frame (1) moves in the direction of at least one stationary shaping part (8).

12. Device according to one of the claims 10 or 11, characterized in that at least the end, lateral portions of the frame (1) are duplicated.

13. Device according to one of the claims 10 to 12, characterized in that the duplicated portion of the frame (1) extends over virtually the entire periphery of the frame.

14. Device according to one of the claims 10 to 13, characterized in that the duplicated portions of the frame (1) are implemented by pivoting elements (4, 30) fixed to a blank frame and which can be substituted for portions of said blank frame for the formation of the final shape.

15. Device according to one of the claims 10 to 14, characterized in that the first position of the frame (1) is such that the angle formed by any vector tangential to said frame with the horizontal plane is below 20° and preferably below 15°.

16. Device according to one of the claims 10 to 15, characterized in that the second position of the frame (1) is such that the angle formed by a vector tangential to the lateral end of the widest portion of the frame and the horizontal plane exceeds 50°.

17. Device according to one of the claims 10 to 16, characterized in that at least one shaping part (8) is such that an at least punctiform contact is brought about with the glazing (20).

18. Device according to claim 17, characterized in that the contact between the shaping part (8) and the glazing (20) is at least linear.

19. Device according to claim 18, characterized in that there is surface contact between the shaping part (8) and the glazing (20).

20. Device according to one of the claims 10 to 19, characterized in that the shaping parts (8) are covered by a net having metal meshes in such a way that the latter is in contact with a glass sheet (20).

21. Application of the process according to one of the claims 1 to 9 to the bending of glass sheets (20) subject to a counter-bending.

22. Application of the process according to one of the claims 1 to 9, for the simultaneous bending of at least two superimposed glass sheets (20).

## Patentansprüche

1. Verfahren zum Biegen wenigstens einer Glasscheibe (20) auf einem Rahmen (1), in dessen Verlauf die (übereinandergelegten) Glasscheibe/n, die auf einem Biegerahmen in horizontaler Position angeordnet ist/sind, auf Verformungstemperatur gebracht und in mindestens zwei Stufen gebogen wird/werden, wobei die erste in der Einwirkung der Schwerkraft auf die Glasscheibe/n besteht, die entlang einer ersten Umfangslinie abgestützt wird/werden, und eine Vorform der Fertigform ergibt und die zweite Stufe zur Fertigform der Glasscheibe/n führt, indem diese entlang einer zweiten Umfangslinie mit anderer Krümmung abgestützt wird/werden, welche die erste ersetzt, **dadurch gekennzeichnet, daß** die Fertigform in der letzten Stufe durch gegebenenfalls gleichzeitige kombinierte Einwirkung der Schwerkraft und mindestens einer zusätzlichen mechanischen Kraft erhalten wird.

2. Verfahren nach Anspruch 1, **dadurch gekennzeichnet, daß** die zusätzliche mechanische Kraft eine Preßkraft ist.

3. Verfahren nach Anspruch 1, **dadurch gekennzeichnet, daß** die zusätzliche mechanische Kraft eine Widerstandskraft ist, welche eine Formgebung der Glasscheibe (20) erlaubt.

4. Verfahren nach einem der Ansprüche 1 bis 3, **dadurch gekennzeichnet, daß** die erste Biegestufe darin besteht, mindestens eine Vorform der Querbiegung zu erzeugen.

5. Verfahren nach einem der Ansprüche 1 bis 4, **dadurch gekennzeichnet, daß** in der ersten Biegestufe im wesentlichen entlang der Querbiegung und entlang der Längsbiegung gebogen wird, wobei letztere im Mittelbereich der Glasscheibe/n (20) lokalisiert ist, **und daß** in der letzten Stufe die ergänzende Biegung durchgeführt wird, die im wesentlichen längs verläuft und in den Randbereichen der Glasscheibe/n lokalisiert ist.

6. Verfahren nach Anspruch 1 bis 5, **dadurch gekennzeichnet**, **daß** die Umfangslinien wenigstens teilweise voneinander verschieden sind.

7. Verfahren nach Anspruch 6, **dadurch gekennzeichnet, daß** sich der Ersatz auf die Seitenbereiche der ersten Umfangslinie erstreckt.

8. Verfahren nach Anspruch 6 oder 7, **dadurch gekennzeichnet**, **daß** der Ersatz darin besteht, die Höhe mindestens eines Teils der zweiten Umfangslinie anzuheben.

9. Verfahren nach einem der Ansprüche 5 bis 8, **dadurch gekennzeichnet, daß** die erste Umfangslinie derart ist, daß der Winkel, der von jedem tangentialen Vektor an dieser Linie mit der horizontalen Ebene gebildet wird, kleiner als 20 Grad und vorzugsweise kleiner als 15 Grad ist.

10. Vorrichtung zum Biegen wenigstens einer Glasscheibe (20) auf einem Rahmen, die einen Rahmen (1) umfaßt, von welchem mindestens ein Teil derart zweiteilig ausgeführt ist, daß er zwei Positionen erlaubt, wobei die erste zu einer Vorform und die zweite zur Fertigform führt, **dadurch gekennzeichnet, daß** sie mindestens ein Formwerkzeug (8), das an der Bildung der Fertigform beteiligt ist, und Mittel (5, 22, 23), die eine relative Annäherung von Formwerkzeug und Rahmen ermöglichen, enthält.

11. Vorrichtung nach Anspruch 10, **dadurch gekennzeichnet, daß** bei der Bildung der Fertigform wenigstens ein Teil des Rahmens (1) in Richtung mindestens eines unbeweglichen Werkzeugs (8) beweglich ist.

12. Vorrichtung nach Anspruch 10 oder 11, **dadurch gekennzeichnet, daß** wenigstens die am Ende befindlichen Seitenteile des Rahmens (1) zweiteilig sind.

13. Vorrichtung nach einem der Ansprüche 10 bis 12, **dadurch gekennzeichnet, daß** der zweiteilige Teil des Rahmens (1) sich über fast den gesamten Rahmenumfang erstreckt.

14. Vorrichtung nach einem der Ansprüche 10 bis 13, **dadurch gekennzeichnet, daß** die zweiteiligen Teile des Rahmens (1) als schwenkbare Elemente (4, 30) ausgeführt sind, die an einem Vorform-Rahmen befestigt sind und Teile dieses Vorform-Rahmens ersetzen können, um die Fertigform zu bilden.

15. Vorrichtung nach einem der Ansprüche 10 bis 14, **dadurch gekennzeichnet, daß** die erste Position des Rahmens (1) derart ist, daß der Winkel, der von jedem tangentialen Vektor an diesem Rahmen mit der horizontalen Ebene gebildet wird, kleiner als 20 Grad und vorzugsweise kleiner als 15 Grad ist.

16. Vorrichtung nach einem der Ansprüche 10 bis 15, **dadurch gekennzeichnet, daß** die zweite Position des Rahmens (1) derart ist, daß der Winkel, der von einem tangentialen Vektor am Seitenende des breitesten Teils des Rahmens mit der horizontalen Ebene gebildet wird, größer als 50 Grad ist.

17. Vorrichtung nach einem der Ansprüche 10 bis 16, **dadurch gekennzeichnet, daß** mindestens ein Formwerkzeug (8) derart ist, daß ein wenigstens punktueller Kontakt mit der Glasscheibe (20) hergestellt wird.

18. Vorrichtung nach Anspruch 17, **dadurch gekennzeichnet, daß** der Kontakt des Formwerkzeugs (8) mit der Glasscheibe (20) wenigstens ein linearer ist.

19. Vorrichtung nach Anspruch 18, **dadurch gekennzeichnet, daß** der Kontakt des Formwerkzeugs (8) mit der Glasscheibe (20) auf der Oberfläche stattfindet.

20. Vorrichtung nach einem der Ansprüche 10 bis 19, **dadurch gekennzeichnet, daß** das/die Formwerkzeug/e (8) mit einem Metallgestrick derart überzogen ist/sind, daß sich dieses in Kontakt mit einer Glasscheibe (20) befindet.

21. Anwendung des Verfahrens nach einem der Ansprüche 1 bis 9 auf das Biegen von Glasscheiben (20), die einer Gegenbiegung unterliegen.

22. Anwendung des Verfahrens nach einem der Ansprüche 1 bis 9 auf das gleichzeitige Biegen von mindestens zwei übereinanderliegenden Glasscheiben (20).
